(19) Europäisches Patentamt
European Patent Office
Office européen des brevets

(11) **EP 2 007 093 A1**

(12) **EUROPEAN PATENT APPLICATION**

(43) Date of publication:
**24.12.2008 Bulletin 2008/52**

(51) Int Cl.:
*H04L 27/26* (2006.01)  *H04L 25/03* (2006.01)

(21) Application number: **07012014.2**

(22) Date of filing: **19.06.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Nokia Siemens Networks Oy**
**02610 Espoo (FI)**

(72) Inventors:
• **Jelonnek, Björn, Dr.**
  **89079 Ulm (DE)**
• **Wolff, Gunter, Dr.**
  **89081 Ulm (DE)**

(74) Representative: **Bruglachner, Thomas E.**
**Nokia Siemens Network GmbH & Co. KG**
**Patentabteilung**
**Postfach 80 17 60**
**81541 München (DE)**

(54) **Method and apparatus for attenuating out-of-band signals of a multi-carrier symbol signal**

(57) The invention relates to a method for attenuating at least partially out-of-band signals of a multi-carrier symbol signal comprising the steps of weighting out-of-band correction sub-carriers at correction frequencies with provided correction coefficients and subtracting the weighted out-of-band correction sub-carriers from the multi-carrier symbol signal.

FIG 4

Attenuation Apparatus    1A

**Description**

The invention relates to a method and an apparatus for attenuating at least partially out-of-band signals of a multi-carrier symbol signal, such as an OFDM multi-carrier symbol signal. OFDM is short for orthogonal frequency division multiplexing which is a modulation technique using a digital multi-carrier modulation scheme having a large number of closely spaced orthogonal subcarriers. OFDM works by splitting signals into multiple smaller sub-signals that are transmitted simultaneously at different frequencies to a receiver. Each sub-carrier is modulated with a conventional modulation scheme at a low symbol rate thus maintaining data rates similar to conventional single carrier modulation schemes in the same bandwidth.

In an OFDM system a switching is performed between two subsequent data symbols, i. e. a hard switching of the signal from one symbol to the other symbol is performed. This leads to an enlargement of the signal spectrum so that other signals at neighbouring frequencies can be disturbed. Accordingly, a suppression of disturbing out-of-band signals is desirable. In conventional OFDM systems, the suppression of out-of-band signals disturbing other signals at neighbouring frequencies is performed by filtering the digital base band signal. This has the disadvantage that, caused by the length of the filter pulse response during filtering, a cross-talk between two subsequent symbols at the symbol border can occur, i. e. an inter-symbol interference ISI is caused.

Accordingly, it is an object of the present invention to provide a method and an apparatus to minimize inter-symbol interference during transmission of a multi-carrier symbol signal via a data transmission channel.

SUMMARY OF THE INVENTION

The invention provides a method for attenuating at least partially out-of-band signals of a multi-carrier symbol signal comprising the steps of:

-    weighting out-of-band correction sub-carriers at correction frequencies with provided correction coefficients; and

-    subtracting the weighted out-of-band correction sub-carriers from the multi-carrier symbol signal.

In a possible embodiment of the method according to the present invention the provided correction coefficients for the correction sub-carriers are calculated by:

-    selecting at least one out-of-band frequency interval by determining corresponding frequencies for out-of-band correction sub-carriers within the interval;

-    providing basic functions for the determined corresponding sub-carrier frequencies;

-    deriving orthogonal basic functions from the provided basic functions and establishing a transformation matrix;

-    calculating orthogonal coefficients for a projection of all used in-band sub-carriers on each derived orthogonal basic function;

-    transforming the calculated orthogonal coefficients to non-orthogonal coefficients; and

-    calculating correction coefficients for the multi-carrier symbol signal depending on the non-orthogonal coefficients.

In an embodiment of the method according to the present invention the multi-carrier symbol signal is formed by an OFDM symbol signal.

In one embodiment of the method according to the present invention the basic function for a determined correction frequency is given by:

$$g_k(\omega) = \sin(1/2 * (\omega - \omega_k) * T_s) / (1/2 * (\omega - \omega_k) * T_s),$$

wherein $T_s$ represents the duration of a multi-carrier symbol with a cyclic prefix in the time domain.

In a possible embodiment of the method according to the present invention the orthogonal basic functions are derived from the basic function by multiplication of a basic function vector $G = \{g_k(\omega)\}$ with a transformation matrix X to calculate an orthogonal function vector $U = \{u_k(\omega)\}$.

In one embodiment of the method according to the present invention the orthogonal coefficients $v_{p,k}$ are calculated from the orthogonal basic functions by:

$$v_{p,k} = \frac{\int_{\omega_a}^{\omega_b} f_p(\omega) \cdot u_k{}'(\omega) \cdot d\omega}{\int_{\omega_a}^{\omega_b} |u_k(\omega)|^2 d\omega},$$

wherein

$$f_p(\omega) = \sin(1/2 * (\omega - \omega_p) * T_s) / (1/2 * (\omega - \omega_p) * T_s),$$

wherein p being an in-band sub-carrier with the centre frequency $\omega_p$ and
with

$$\omega_p = 2\pi * p / T_d,$$

wherein
$T_d$ is the symbol duration of a multi-carrier symbol without a cyclic prefix in the time domain.
In one embodiment of the method according to the present invention the calculated orthogonal coefficients $v_{p,k}$ are transformed to non-orthogonal coefficients by multiplying an orthogonal coefficient vector with an inverse transformation matrix $X^{-1}$:

$$z_p = X^{-1} * v_p,$$

wherein

$$z_p = X^{-1} * v_p \quad \text{with} \quad z_p = \begin{bmatrix} z_{p,1} \\ z_{p,2} \\ \vdots \\ z_{p,k} \end{bmatrix} \quad \text{and} \quad v_p = \begin{bmatrix} v_{p,1} \\ v_{p,2} \\ \vdots \\ v_{p,k} \end{bmatrix}.$$

In one embodiment of the method according to the present invention the correction coefficients $r_{k,q}$ for the multi-carrier symbol signal are calculated by:

$$r_{k,q} = \sum_p (M_{p,q} * z_{p,k}),$$

wherein said parameter Mp,q represents a complex symbol of the p-th useful in-band sub-carrier of the q-th multi-carrier symbol of a multi-carrier signal.

In one embodiment of the method according to the present invention the basic functions are extended beyond the duration $T_s$ of a symbol by a multiplication in the frequency domain with $e^{-j\omega n \cdot T_s}$, wherein n is a range of integer numbers, thus yielding a higher number of basic functions.

The invention further provides an attenuation apparatus for attenuating at least partially out-of-band signals of a multi-carrier symbol signal comprising:

- means for weighting out-of-band correction sub-carriers at correction frequencies with provided correction coefficients; and

- means for subtracting the weighted out-of-band correction sub-carriers from the multi-carrier symbol signal.

The invention further provides an attenuation apparatus for attenuating at least partially out-of-band signals of a multi-carrier symbol signal comprising:

- a fourier transformation unit for performing a fourier transformation for each multi-carrier symbol signal;

- a correction network (NW) for attenuating at least partially out-of-band signals of the multi-carrier symbol signal by weighting out-of-band correction sub-carriers at predetermined correction frequencies with correction coefficients and subtracting the weighted out-of-band correction sub-carriers from the transformed multi-carrier symbol signal; and

- an inverse fourier transformation unit for performing an inverse fourier transformation of the attenuated signal.

In one embodiment of the attenuation apparatus according to the present invention the fourier transformation unit is formed by a fast fourier transformation unit.

In one embodiment of the inverse fourier transformation unit according to the present invention the inverse fourier transformation unit is formed by an inverse fast fourier transformation unit.

In the following, possible embodiments of the method and apparatus according to the present invention for attenuating at least partially out-of-band signal of a multi-carrier symbol signal are described with reference to the enclosed figures.

BRIEF DESCRIPTION OF THE FIGURES

Figure 1 shows a frequency spectrum of different useful band sub-carriers of an OFDM(A) multi-carrier symbol;

Figure 2a shows a multi-carrier spectrum of one OFDM(A) multi-carrier symbol;

Figure 2b shows exemplarily a diagram for illustrating an attenuation method according to one embodiment of the present invention to attenuate out-of-band signals;

Figure 3 shows a flow diagram of the calculation of correction coefficients of out-of-band correction-sub-carriers as employed by an embodiment of the attenuation method shown in figure 2b;

Figure 4 shows a block diagram of an attenuation apparatus as an exemplary implementation of the attenuation method according to the present invention;

Figure 5 shows an exemplary embodiment of a correction network NW within the attenuation apparatus of figure 4 in detail;

Figure 6 shows an exemplary embodiment of an arrangement of a correction branch CB within a correction network NW of figure 5 in detail;

Figure 7 shows a block diagram of an attenuation apparatus as a further exemplary implementation of the attenuation method according to the present invention;

Figure 8 shows a block diagram of an attenuation apparatus as a further exemplary implementation of the attenuation method according to the present invention;

Figure 9 shows a block diagram of an attenuation apparatus as a further exemplary implementation of the attenuation method according to the present invention;

Figure 10 shows a block diagram of an attenuation apparatus as a further exemplary implementation of the attenuation method according to the present invention.

DETAILED DESCRIPTION OF EXEMPLARY EMBODIMENTS OF THE INVENTION

The drawings described below are exemplarily based on OFDM(A) multi-carrier symbols. However, the method of the present invention is not limited to the OFDM(A) signals and can be also used for other signals which are based on a multi-carrier or CDMA techniques.

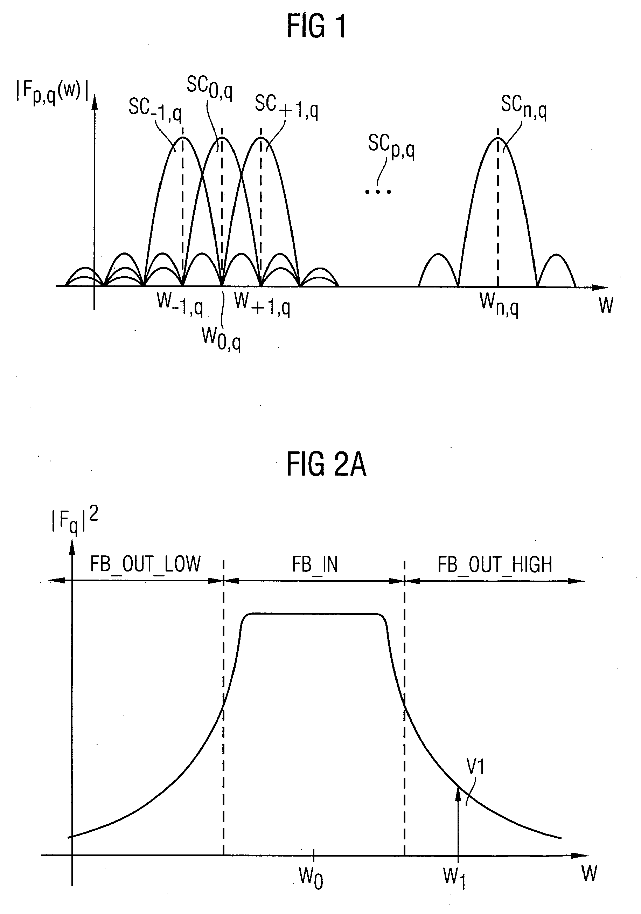

Figure 1 shows a frequency spectrum of different useful band sub-carriers SC of an OFDM(A) multi-carrier symbol. The frequency spectrum $|F_{p,q}(\omega)|$ of several useful band sub-carriers $SC_{-1,q}$, $SC_{0,q}$, $SC_{+1,q}$ and $SC_{n,q}$ shown in figure 1 correspond to the centre frequencies $\omega_{-1}$, $\omega_0$, $\omega_{+1}$ and $\omega_p$, respectively. The index q represents the number of an individual multi-carrier symbol of an OFDM(A) multi-carrier signal, whereas the index p represents the number of a single useful band sub-carrier of an OFDM(A) multi-carrier symbol. Further useful band sub-carriers SCp,q are also indicated. The frequency spectrum of each useful band sub-carrier $SC_{-1,q}$, $SC_{0,q}$, $SC_{+1,q}$ or $SC_{n,q}$ is caused by square windowing with a symbol duration of one OFDM(A) multi-carrier symbol in the time domain. Adding up the frequency spectrum of all useful band sub-carriers SCp,q results in a multi-carrier spectrum as shown in figure 2a.

Figure 2a shows a multi-carrier spectrum of one OFDM(A) multi-carrier symbol. This multi-carrier spectrum with the centre frequency $\omega_0$ illustrates in logarithmic form the signal power $|F_q|^2$ with over sampling and free of aliasing error. This multi-carrier spectrum covers one in-band frequency interval FB_IN and two out-of-band frequency intervals FB_OUT_HIGH and FB_OUT_LOW which indicate the higher out-of-band frequencies and lower out-of-band frequencies, respectively. The signal power in both out-of-band frequency intervals FB_OUT_HIGH and FB_OUT_LOW are attenuated by the method according to one embodiment of the present invention to reduce the influence on adjacent channels which may exist in both out-of-band frequency intervals. The vector V1' shown in figure 2a represents exemplarily an original out-of-band signal having the frequency $\omega_k$ with a signal power $|F_q(\omega_k)|^2$ in the higher out-of-band frequency interval FB_OUT_HIGH.

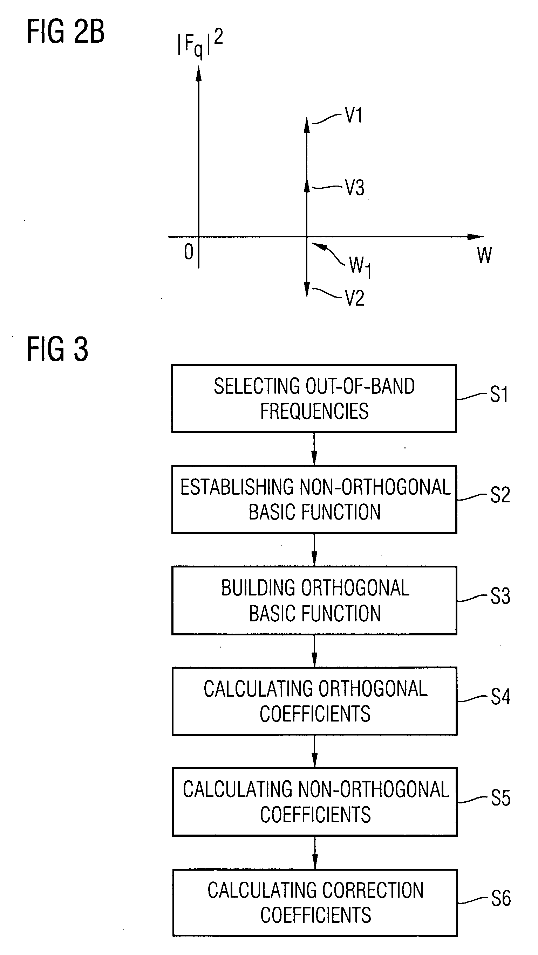

Figure 2b shows a diagram for illustrating exemplarily an embodiment of an attenuation method according to the present invention to attenuate out-of-band signals. In figure 2b the vector V1 represents an original out-of-band signal having a frequency $\omega_k$ with a signal power $|F_q(\omega_k)|^2$ corresponding to the vector V1' in figure 1. The vector V2 represents a negative out-of-band correction-sub-carrier $-R_{k,q}$ having the frequency $\omega_k$ which may contain a correction coefficient $-r_{k,q}$. The summation of both vectors V1 and V2 results in a vector V3:

$$V3 = |F_q(\omega_k)|^2 - R_{k,q} \qquad\qquad (1)$$

with

$$R_{k,q} = r_{k,q} * e^{j\cdot\omega_k t}$$

so that a reduction of the out-of-band signal at the frequency $\omega_k$ is achieved.

Figure 3 shows a flow diagram of the calculation of correction coefficients $r_{k,q}$ of out-of-band correction-sub-carriers $R_{k,q}$ as employed in an embodiment of the attenuation method illustrated in figure 2b. The correction coefficients $r_{k,q}$ represent the scaling factors of the out-of-band correction-sub-carriers $R_{k,q}$ at several correction frequencies $\omega_k$ where the out-of-band signals are to be attenuated. The index k runs across all out-of-band correction-sub-carriers $R_{k,q}$, which are present in the selected frequency range for interference cancellation.

The calculation of the correction coefficients $r_{k,q}$ is hereinafter described in more detail:

At step S1, at least one out-of-band frequency interval $[\omega_a ; \omega_b]$ in which the out-of-band signals are to be attenuated is selected. Furthermore, possible frequencies $\omega_k$ for the corresponding out-of-band sub-carriers $R_{k,q}$ are also determined within this interval, for example $\omega_k$ with $\omega_a < \omega_k < \omega_b$.

In step S2, non-orthogonal basic functions $g_k(\omega)$ are provided, based on the determined frequencies $\omega_k$ in step S1. These non-orthogonal basic functions can be expressed by the formula:

$$g_k(\omega) = \sin(1/2*(\omega-\omega_k)*T_s)/(1/2*(\omega-\omega_k)*T_s), \qquad (2)$$

wherein the parameter $T_s$ represents the symbol duration of one OFDM(A) multi-carrier symbol with cyclic prefix in the time domain.
At step S3, orthogonal basic functions $u_k(\omega)$ are derived from the non-orthogonal basic functions $g_k(\omega)$ established in step S2 and a transformation matrix X is established that indicates a relation between the non-orthogonal function vector $G = \{g_k(\omega)\}$ and the orthogonal function vector $U = \{u_x(\omega)\}$:

$$U = X*G. \qquad (3)$$

At step S4, orthogonal coefficients $v_{p,k}$ for the projection of the useful band sub-carrier functions $f_p(\omega)$ onto the respective orthogonal basic functions $u_k(\omega)$ derived in step S3 are calculated. This calculation may be based on each useful band sub-carrier of one OFDM(A) multi-carrier symbol and the respective orthogonal functions $u_k(\omega)$. Each useful band sub-carrier with the centre frequency $\omega_p$ can be expressed as having the following signal form $f_p(\omega)$ of:

$$f_p(\omega) = \sin(1/2*(\omega-\omega_p)*T_s)/(1/2*(\omega-\omega_p)*T_s), \text{ with } \omega_p = 2\pi*p/T_d. \quad (4)$$

The parameter $T_d$ describes the symbol duration of one OFDM(A) multi-carrier symbol without cyclic prefix in time domain. The formula for calculating the orthogonal coefficients $v_{p,k}$ is given by:

$$v_{p,k} = \frac{\int\limits_{\omega_a}^{\omega_b} f_p(\omega) \cdot u_k{}'(\omega) \cdot d\omega}{\int\limits_{\omega_a}^{\omega_b} |u_k(\omega)|^2 \, d\omega} \qquad (5)$$

In step S5 the orthogonal coefficients $V_{p,k}$ are further transformed to non-orthogonal coefficients $Z_{p,k}$. The non-orthogonal coefficients $z_{p,k}$ refer to the non-orthogonal function basis G. This transformation is given by:

$$z_p = X^{-1} * v_p \text{ with } z_p = \begin{bmatrix} z_{p,1} \\ z_{p,2} \\ \vdots \\ z_{p,k} \end{bmatrix} \text{ and } v_p = \begin{bmatrix} v_{p,1} \\ v_{p,2} \\ \vdots \\ v_{p,k} \end{bmatrix} \qquad (6)$$

At step S6 the correction coefficients $r_{k,q}$ for the q-th multi-carrier symbol are calculated. This calculation can be expressed by the formula:

$$r_{k,q} = \sum_{p} (M_{p,q} * z_{p,k}).$$ (7)

The parameter $M_{p,q}$ represents a complex symbol of the p-th useful band sub-carrier of the q-th multi-carrier symbol of an OFDM(A) multi-carrier signal.

It is noted that, since the non-orthogonal coefficients $z_{p,k}$ do not depend on a particular multi-carrier symbol of the OFDM(A) multi-carrier signal, for further multi-carrier symbols with different complex symbols $M_{p,q}$, the calculation has only to be repeated at step S6 to calculate further correction coefficients $r_{k,q}$.

In a further embodiment more than one frequency interval can be selected in step S1. Accordingly, the following steps S2 to S6 are adapted to this embodiment for several frequency intervals. For example, the orthogonal coefficients $v_{p,k}$ are expressed by the formula:

$$v_{p,k} = \frac{\sum_{i=1}^{L} \int_{\omega_{ai}}^{\omega_{bi}} f_p(\omega) \cdot u_k{}'(\omega) \cdot d\omega}{\sum_{i=1}^{L} \int_{\omega_{ai}}^{\omega_{bi}} |u_k(\omega)|^2 d\omega}$$ (8)

for L selected frequency intervals $[\omega_{a1}; \omega_{b1}]$ to $[\omega_{aL}; \omega_{bL}]$.

Furthermore, extending the basic functions $g_k(\omega)$ over one symbol duration $T_s$ improves the quality of the attenuation of the out-of-band signals. The additional basic functions may be obtained by multiplying the original basic function such as $g_k(\omega)$ in step S2 with $e^{-j\omega \cdot n \cdot T_s}$ in the frequency domain to shift the original basic function $g_k(\omega)$ over $n*T_s$ symbol duration according to:

$$g_{k,n}(\omega) = g_k(\omega) * e^{-j\omega \cdot n \cdot T_s}$$ (9)

The following calculation steps S4 to S6 are adapted to the extended basic functions.

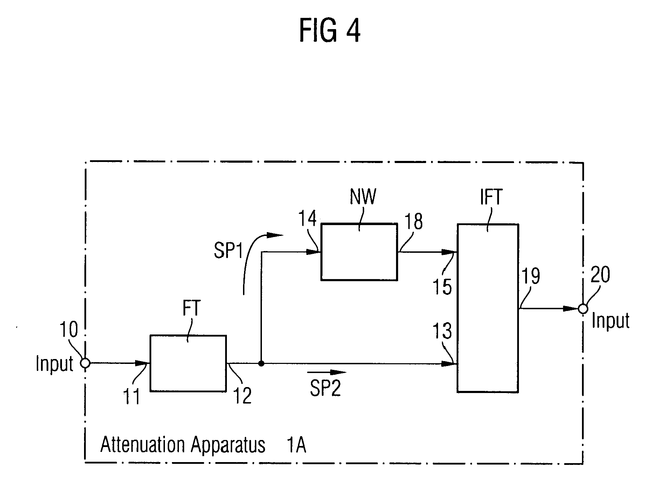

Figure 4 shows a block diagram illustrating a possible implementation of the suppression method according to an embodiment of the present invention for out-of-band signals. This embodiment can be used for OFDM(A) multi-carrier signals with guard interval as well as for other signals not based on an OFDM(A) procedure.

The implementation of the attenuation method is formed by an attenuation apparatus denoted by a reference symbol 1A as shown in figure 4, wherein said apparatus comprises a signal input 10 which is coupled to a signal input 11 of a fourier transformation circuit FT. This fourier transformation circuit FT comprises a signal output 12 which is coupled to a signal input 14 of a correction network NW via a signal path SP1. The implementation shown in figure 4 further comprises an Inverse fourier transformation circuit IFT with a first signal input 15 coupled to a signal output 18 of the correction network NW. This Inverse fourier transformation circuit IFT comprises a second signal input 13 directly coupled to the signal output 12 of the fourier transformation circuit FT via a signal path SP2. The Inverse fourier transformation circuit IFT comprises further a signal output 19 coupled to a signal output 20.

In figure 4 an OFDM(A) multi-carrier signal in the time domain is input via the signal input 10 of the attenuation circuit 1. This multi-carrier signal is transformed into the frequency domain via the fourier transformation circuit FT. This fourier transformation circuit FT provides at its signal output 12 output signals in form of complex symbols of useful band sub-carriers of OFDM(A) multi-carrier symbols such as $M_{p,q}$ mentioned in context with step S6 of figure 3. These complex symbols of useful band sub-carriers are transferred via the signal path SP2 unchanged directly to the signal input 13 of the Inverse fourier transformation circuit IFT and furthermore these complex symbols of useful band sub-carriers are supplied to the correction network NW via the signal path SP1. By means of the correction network NW a calculation of the correction coefficients of out-of-band correction-sub-carriers such as $r_{k,q}$ mentioned in context with step S6 of figure 3 is carried out on the basis of these complex symbols of useful band sub-carriers. The calculated correction coefficients $r_{k,q}$ output by the correction network NW are fed into the Inverse fourier transformation circuit IFT via the signal input 15. The Inverse fourier transformation circuit IFT transforms the complex symbols at the signal input 13 and the correction coefficients from the signal input 15 with over sampling into the time domain, so that an OFDM(A) multi-carrier signal with attenuated out-of-band signals is generated. This transformed output signal is output by the signal output 20.

In another embodiment, the signal inputs 13, 14, 15 and the signal outputs 12 and 18 in figure 4 are formed by a bundle of signal paths and comprise more than one signal input or output path.

The fourier transformation circuit FT and the Inverse fourier transformation circuit IFT can be implemented as a Discrete fourier transformation circuit DFT and an Inverse Discrete fourier transformation circuit IDFT, respectively. In a further embodiment the fourier transformation circuit FT and the inverse fourier transformation circuit are formed by a fast fourier transformation circuit FFT and an Inverse fast fourier transformation circuit IFFT, respectively. The Discrete fourier transformation circuit DFT and the fast fourier transformation circuit FFT may provide complex discrete symbols of useful band sub-carriers.

In another embodiment, an even number of correction networks NW can be arranged symmetrically to the signal path SP2 to achieve an attenuation of out-band-signals which are symmetric to the useful band sub-carriers. Further, for out-of-band signals which may not have to be attenuated dummy values for example having the value zero can be inserted into the Inverse fourier transformation IFT instead of the relevant correction coefficients.

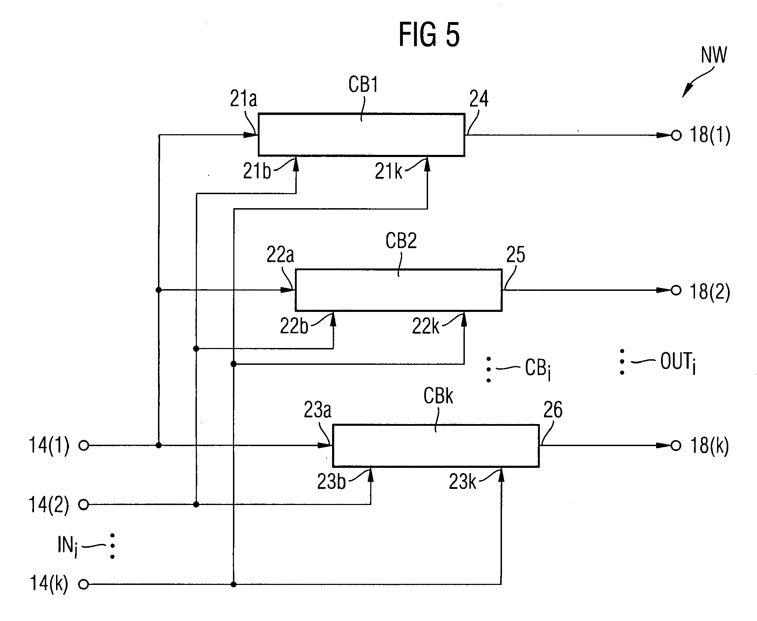

Figure 5 shows an embodiment of a correction network NW within the attenuation circuit in detail. In this embodiment, the correction network NW comprises exemplarily signal inputs 14(1), 14(2) to 14(k) and corresponding signal outputs 18(1), 18(2) ... 18(k) as well as correction branches CB1, CB2 and CBk. The further inputs $In_i$, outputs $Out_i$ and correction branches $CB_i$ which are possibly contained in the correction network NW are also indicated. The signal inputs 14(1), 14(2) and 14(k) are coupled to signal inputs 21a, 21b, and 21k of any correction branch CB1 and to signal inputs 22a, 22b and 22k of the correction branch CB2 as well as to signal inputs 23a, 23b and 23k of the correction branch CBk, respectively. The correction branches CB1, CB2, and CBk comprise respective signal outputs 24, 25 and 26 connected with the signal outputs 18(1), 18(2), 18(k) shown in figure 5.

The signal inputs 14(1), 14(2) ... 14(k) provide signals in form of the complex symbols of useful band sub-carriers of an OFDM(A) multi-carrier symbol to the correction branches CB1, CB2 ... CBk. These signals may be supplied from the signal output 12 shown in figure 4. The correction branches CB1, CB2 ... CBk have in a preferred embodiment a similar structure to calculate the correction coefficients $r_{k,q}$. The correction coefficients $r_{k,q}$ provided as output signals by the correction branches $CB_i$ are transferred to the respective signal outputs 18(1), 18(2) ... 18(k) which are further coupled to the Inverse fourier transformation circuit IFT shown in figure 4.

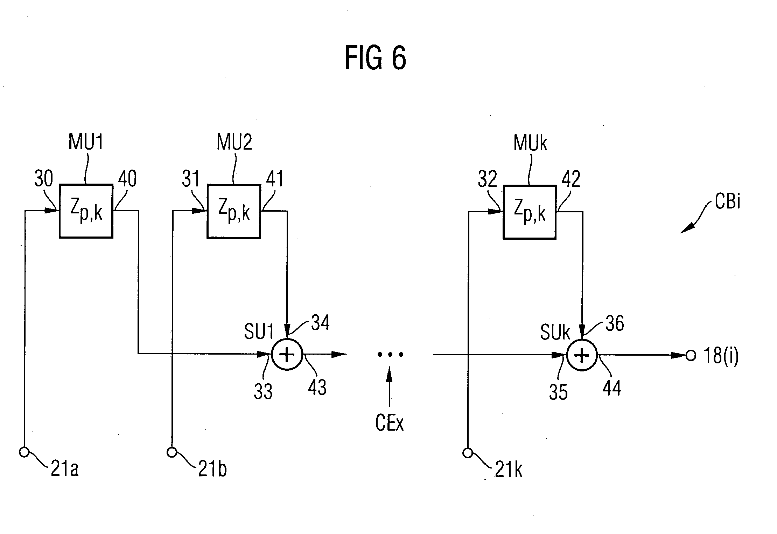

Figure 6 shows an exemplary arrangement of the correction branch $CB_i$ shown figure 5 in detail. The arrangement of the correction branch $CB_i$ comprises signal inputs 21a, 21b ... 21k and a signal output 18(1). The signal inputs 21a, 21b ... 21k are coupled to signal inputs 30, 31 and 32 of multiplication units MU1, MU2 ... MUK, respectively. In addition, the shown embodiment comprises a first summation unit SU1 with two signal inputs 33 and 34 which are coupled to a signal output 40 of the multiplication unit MU1 and a signal output 41 of the multiplication unit MU2, respectively. The first summation unit SU1 comprises further a signal output 43. A reference symbol CEx represents further signal inputs and multiplication units MU as well as summation units SU which may be contained in the correction branch $CB_i$. The signal output 43 of the first summation unit SU1 may be connected with a further summation unit SU. The embodiment shown in figure 6 comprises further a summation unit $SU_K$. This summation unit SUK comprises two signal inputs 35 and 36. The signal input 36 of the summation unit SUK is coupled to a signal output 42 of the multiplication unit MUK, whereas the signal input 35 of the summation unit SUK may be connected with a (not shown) further summation unit. The summation unit SUK comprises a signal output 44 coupled to the signal output 18(i) of correction branch CBi.

In the embodiment shown in figure 6 via the signal inputs 21a, 21b ... 21k signals in form of complex symbols of useful band sub-carriers of an OFDM(A) multi-carrier symbol are supplied to the signal inputs of the respective multiplication units MU1, MU2 ... MUK. The complex symbols are multiplied with coefficients stored in these multiplication units MU. For example, the non-orthogonal coefficients $Z_{p,k}$ mentioned in context with in figure 3 are stored in the multiplication units MU. The output signals of the multiplication units MU1 ... MU2 are added at the summation unit SU1. The summation unit SU1 provides a summation result which may be used as an input signal for the next summation unit SU. The multiplication unit MUK provides an output signal added to a summation result supplied by a previous summation unit SU. The summation unit SUK provides a correction coefficient $r_{k,q}$ as an output signal at the signal output 18(i) of the correction branch CBi.

In further embodiments of a correction branch CBi of the correction network NW the multiplication units MU1, MU2 ... MUK and the summation units SU1 ... SUK shown in figure 6 can be replaced by alternative calculation units such as division units or subtraction units.

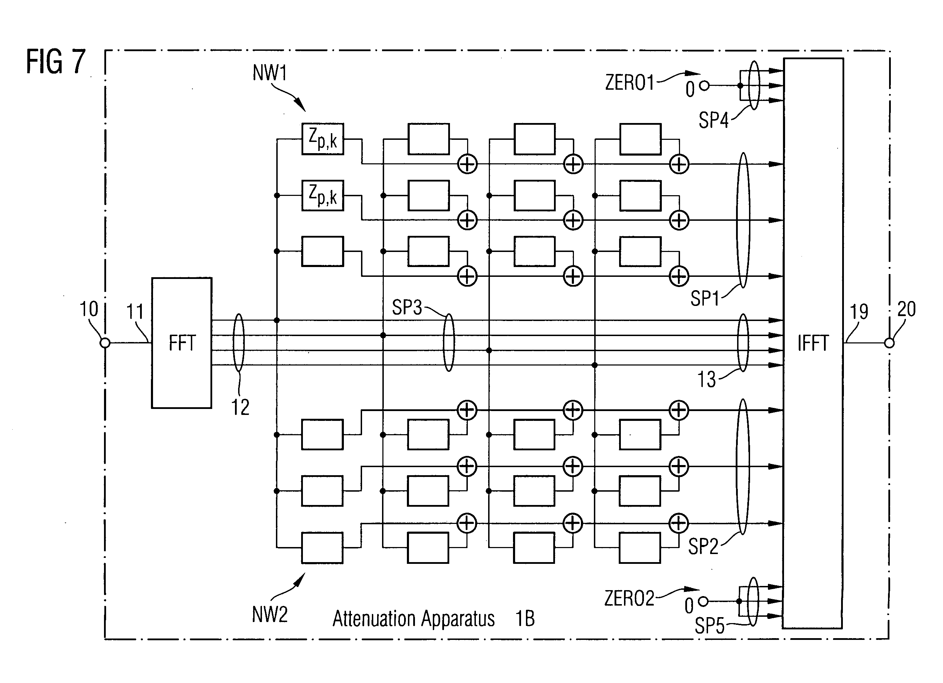

Figure 7 shows an embodiment of an exemplary implementation of the attenuation apparatus according to the present invention for the out-of-band signals.

This implementation of the attenuation apparatus 1 denoted by reference symbol 1B is a simplified digital implementation of the block diagram of the attenuation apparatus 1A shown in figure 4 by using a fast fourier transformation circuit FFT and an inverse fourier transformation circuit IFFT. The fast fourier transformation circuit FFT comprises a signal input 11 coupled to a signal input 10 of the attenuation apparatus 1B and a bundle of.signal outputs denoted by reference number 12. On the one hand, the signal outputs 12 are coupled to a bundle of signal inputs 13 of the Inverse fourier transformation circuit IFFT via signal paths SP3. The correction networks NW1 and NW2 have a similar structure as the correction network NW shown in figure 5 and comprising correction branches CB such as the correction branch $CB_i$ shown in figure 6 are arranged symmetrically and coupled to the signal paths SP3. These correction networks NW1 and NW2 are further coupled to the Inverse fourier transformation circuit IFFT via signal paths SP1 and SP2. In addition, circuits ZERO1 and ZERO2 are arranged symmetrically to the signal path SP3 and coupled to the Inverse fourier transformation circuit IFFT via signal paths SP4 and SP5, respectively. The Inverse fourier transformation circuit IFFT comprises a signal output 19 coupled to a signal output 20 of the attenuation circuit 1 and transforms the frequency domain signal into a time domain signal.

In the embodiment shown in figure 7, the fast fourier transformation circuit FFT provides as digital output signals complex discrete symbols of useful band sub-carriers of an OFDM(A) multi-carrier symbol. On the one hand, these complex discrete symbols are used to calculate the correction coefficients $r_{k,q}$ of out-of-band correction-sub-carriers SC which may be symmetric to the useful in-band sub-carriers SC by using the correction networks NW1 and NW2. It is noted that the correction networks NW1 and NW1 may contain different coefficients for the calculation. The circuits ZERO1 and ZERO2 provide zeros inserted into the Inverse fast fourier transformation circuit IFFT for out-of-band signals which may not have to be attenuated. The Inverse fast fourier transformation circuit IFFT transforms its input signals into an OFDM(A) multi-carrier signal with attenuated out-of-band signals in the time domain. This transformed output signal is provided to the signal output 20 of the attenuation circuit 1B. In a further embodiment, it is also possible to omit the FFT circuit if the symbols are provided as amplitude values for the used sub-carriers in the frequency domain. In a further embodiment, it is also possible using additional FFT and IFFT circuits to convert non-OFDM signals into the frequency domain so that out-of-band interference cancellation can be applied according to the inventive technique.

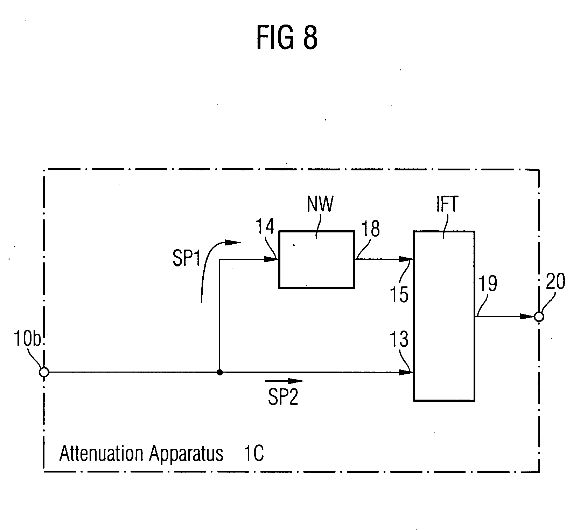

Figure 8 shows a block diagram illustrating another attenuation apparatus 1 as an implementation of the attenuation method according to the present invention. This implementation denoted by reference symbol 1C has the same circuit structure compared to the embodiment of figure 4 apart from not comprising the fourier transformation circuit FT. In figure 5 a signal input 10 of the attenuation apparatus 1C supplies directly output signals in form of complex symbols of useful band sub-carriers of an OFDM(A) multi-carrier symbol. The implementation of figure 8 is suited for OFDM(A) multi-carrier signals without guard interval.

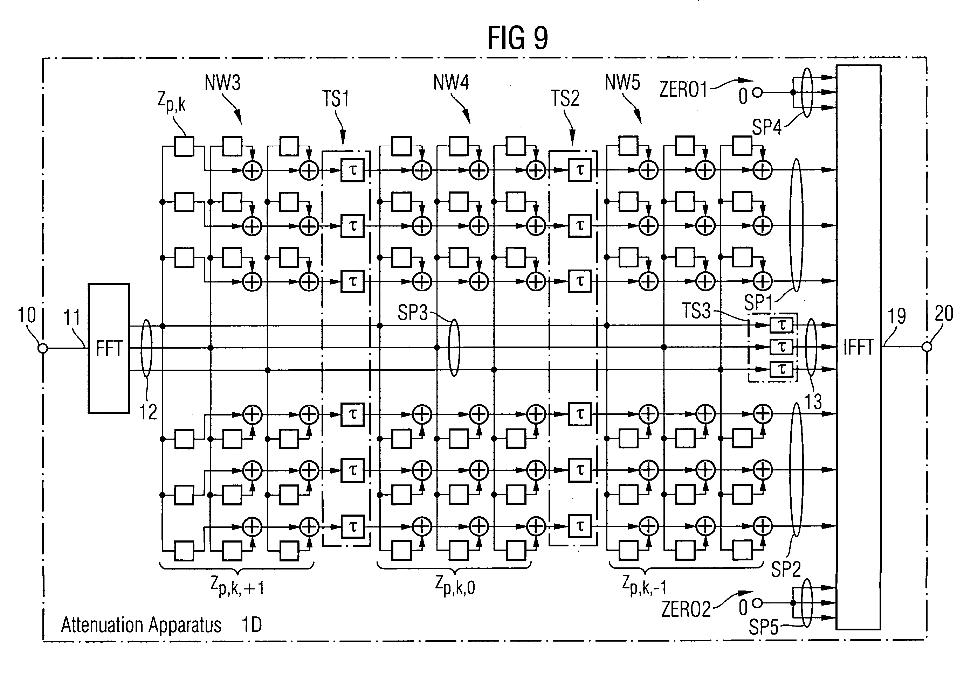

Figure 9 shows a block diagram illustrating an attenuation apparatus 1D as a modified implementation of the attenuation method according to the invention. This modified implementation denoted by a reference symbol 1D is based on extended basis functions $g_k(\omega)$ over one symbol duration $T_s$ of an OFDM(A) multi-carrier symbol as mentioned in context with figure 3. The implementation shown in figure 9 comprises a symmetric structure of the correction networks NW. However, an unsymmetrical structure of the correction networks NW is also possible.

The embodiment shown in figure 9 has a similar structure as the embodiment shown in figure 7. The modifications compared to figure 7 are hereinafter described in detail.

In figure 9 correction networks NW3, NW4 and NW5 are arranged symmetrically and coupled to the signal paths SP3. In addition, time shifting circuits TS1 and TS2 are arranged between the correction networks NW3 and NW4 as well as between the correction networks NW4 and NW5, respectively. This embodiment comprises a further time shifting circuit TS3 whose inputs coupled to the signal output 12 and outputs coupled to the signal inputs 13 of the Inverse fast fourier transformation circuit IFFT.

The correction networks NW3, NW4 and NW5 may have the same functionality as the correction networks NW1 and NW2 shown in figure 7. The correction networks NW3, NW4 and NW5 calculate the correction coefficients $r_{k,q,n}$ of the out-of-band correction-sub-carriers for different OFDM(A) multi-carrier symbols one after the other. Each of the time shifting circuits TS1 and TS2 comprises for example a delay time of a symbol duration $T_s$ or $T_d$ of an OFDM(A) multi-carrier symbol. The complex discrete symbols of useful band sub-carriers are delayed by the time shifting circuit TS3 which may also contain a symbol duration of an OFDM(A) multi-carrier symbol. Via these time shifting circuits $T_s$ the calculated correction coefficients $r_{k,q,n}$ from the correction networks NW3, NW4 and NW5 can be combined to improve the attenuation of the out-of-band signals. In a further refinement of the embodiment disclosed in fig. 9, circuits ZERO1 and ZER02 can be removed. By using the embodiment shown in figure 9 an improved quality of the output signal can be achieved.

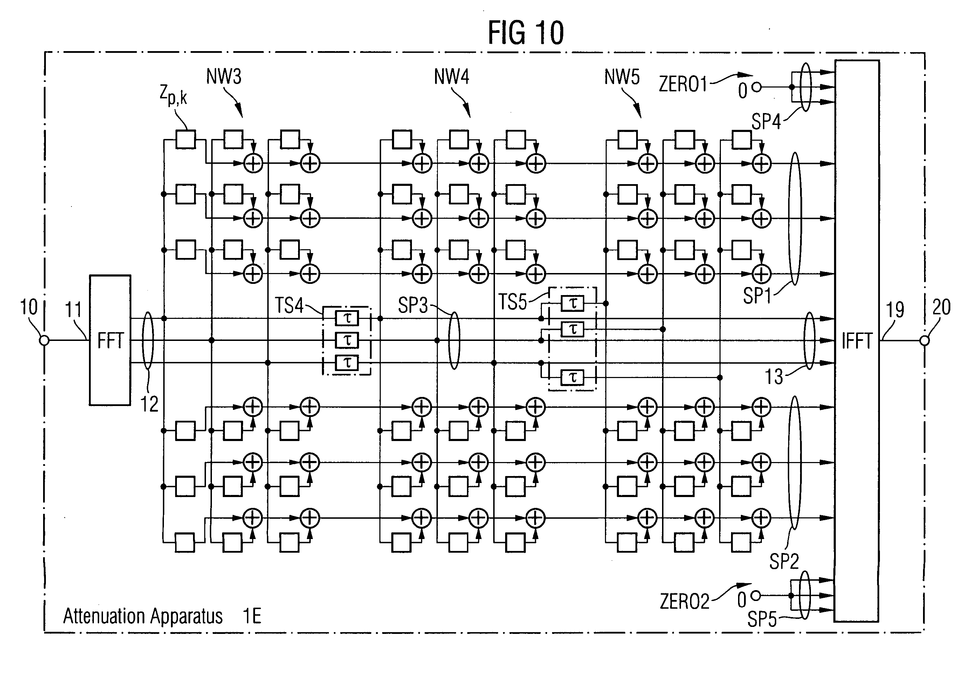

Figure 10 shows a block diagram of an attenuation apparatus 1E as a modification of the implementation of figure 9 with the same functionality. In the embodiment of figure 10 the original discrete complex symbols provided from the signal output 12 are delayed by time shift circuits TS4 and TS5. The calculation for correction coefficients by means of the correction networks NW3, NW4 and NW5 are carried out simultaneously. The output signal provided by the signal output 20 of the attenuation apparatus 1E of figure 10 is identical to the output signal of the attenuation apparatus 1D of figure 9. In a further refinement of the embodiment disclosed in fig. 10, circuits ZERO1 and ZERO2 can be removed.

The embodiment of the attenuation apparatus 1 shown in figure 9 and 10 can be used with several correction networks and time shifting circuits $T_s$ for several OFDM(A) multi-carrier symbols. Furthermore, symmetric or unsymmetrical time shifting is possible.

The method according to the present invention can be implemented in hardware by an attenuating apparatus for attenuating out-of-band signals as shown in the embodiments of figures 4 to 10.

In an alternative embodiment the method according to the present invention is performed by executing a computer program from a general purpose calculation unit, such as a microprocessor.

In a possible embodiment of the method and apparatus according to the present invention the correction coefficients are calculated before the transmission of the multi-carrier symbol signal and the correction network NW is implemented with hard-wired multiplication units weighting the out-of-band correction carriers with the precalculated correction coefficients.

In a preferred embodiment the calculating units for performing the weighting with the calculated correction coefficients are configurable.

In an alternative embodiment the calculation of the correction coefficients of the correction sub-carriers is performed during the data transmission of the sub-carrier symbols depending on parameters of the multi-carrier symbol, such as the number and frequencies of the sub-carriers.

The method and apparatus for attenuating at least partially out-of-band signals of a multi-carrier symbol signal is applicable for any multi-carrier system, such as OFDM. The multi-carrier data transmission is used, for example in xDSL-broad band access systems, Wireless Local Area Networks, DAB-systems, HD-radio, T-DMB, digital TV-systems, WiMax, Mobile Broadband Wireless Access Systems, Flash-OFDM-Cellular systems, Ultra-Wideband systems, and Powerline Communication PLC-systems.

Although the invention has been described in terms of preferred embodiments described herein, those skilled in the art will appreciate other embodiments and modifications which can be made without departing from the scope of the teachings of the invention. All such modifications are intended to be included within the scope of the claims appended hereto.

## Claims

1. Method for attenuating at least partially out-of-band signals of a multi-carrier symbol signal comprising the steps of:

   - weighting out-of-band correction sub-carriers ($R_{k,q}$) at correction frequencies ($\omega_k$) with provided correction coefficients ($r_{k,q}$), and
   - subtracting the weighted out-of-band correction sub-carriers ($R_{k,q}$) from the multi-carrier symbol signal.

2. Method according to claim 1, wherein the provided correction coefficients ($r_{k,q}$) for the correction sub-carriers ($R_{k,q}$) are calculated by:

   - selecting (S1) at least one out-of-band frequency interval by determining corresponding frequencies ($\omega_k$) for out-of-band correction sub-carriers ($R_{k,q}$) within said interval;
   - providing (S2) basic functions ($g_k(\omega)$) for the determined corresponding sub-carrier frequencies ($\omega_k$);
   - deriving (S3) orthogonal basic functions ($u_k(\omega)$) from the provided basic functions ($g_k(\omega)$) and establishing a transformation matrix;
   - calculating (S4) orthogonal coefficients ($v_{p,k}$) for a projection of all used in-band sub-carriers on each derived orthogonal basic function ($u_k(\omega)$);
   - transforming (S5) the calculated orthogonal coefficients ($v_{p,k}$) to non-orthogonal coefficients ($z_{p,k}$), and
   - calculating (S6) correction coefficients ($r_{k,q}$) for the multi-carrier symbols depending on the non-orthogonal coefficients ($z_{p,k}$).

3. Method according to claim 1, wherein the multi-carrier signal spectrum is formed by the signal spectrum of an orthogonal frequency division multiplexing symbol.

4. Method according to claim 2, wherein the basic function ($g_k(\omega)$) for a determined correction frequency ($\omega_k$) is given by:

$$g_k(\omega) = \sin(1/2 * (\omega - \omega_k) * T_s) / (1/2 * (\omega - \omega_k) * T_s),$$

wherein $T_s$ represents the duration of a multi-carrier symbol with a cyclic prefix in the time domain.

5. Method according to claim 2, wherein the orthogonal basic functions ($u_k(\omega)$) are derived from the basic functions ($g_k(\omega)$) by multiplication of a basic function vector ($G = \{g_k(\omega)\}$) with a transformation matrix ($X$) to calculate an

orthogonal vector ($U = \{u_k(\omega)\}$: $U = X^*G$).

6. Method according to claim 2, wherein the orthogonal coefficients ($v_{p,k}$) are calculated from the orthogonal basic function ($u_k(\omega)$) by:

$$v_{p,k} = \frac{\int\limits_{\omega_a}^{\omega_b} f_p(\omega) \cdot u_k^{'}(\omega) \cdot d\omega}{\int\limits_{\omega_a}^{\omega_b} \left| u_k(\omega) \right|^2 d\omega},$$

wherein

$$f_p(\omega) = \sin(1/2 * (\omega-\omega_p) * T_s) / (1/2 * (\omega-\omega_p) * T_s),$$

with $\omega_p = 2\pi^* p/T_d$, $f_p(\omega)$ being a sub-carrier (SC) with a centre frequency ($\omega_p$) and $T_d$ being a symbol duration of a multi-carrier symbol without a cyclic prefix in the time domain.

7. Method according to claim 2, wherein the calculated orthogonal coefficients ($v_{p,k}$) are transformed to non-orthogonal coefficients ($z_{p,k}$) by multiplying an orthogonal coefficient vector ($v_p$) with an inverse transformation matrix ($X^{-1}$) :

$$z_p = X^{-1} * v_p$$

with

$$z_p = \begin{bmatrix} z_{p,1} \\ z_{p,2} \\ \vdots \\ z_{p,k} \end{bmatrix} \quad \text{and} \quad v_p = \begin{bmatrix} v_{p,1} \\ v_{p,2} \\ \vdots \\ v_{p,k} \end{bmatrix}.$$

8. Method according to claim 2, wherein the correction coefficient ($r_{k,q}$) for the q multi-carrier symbol are calculated by:

$$r_{k,q} = \sum_p (M_{p,q} * z_{p,k}),$$

wherein the parameter ($M_{p,q}$) represents a complex symbol of the p useful band sub-carrier of the q multi-carrier symbol of a multi-carrier signal.

9. Method according to claim 3, wherein the basic functions ($g_k(\omega)$) are extended beyond the duration ($T_s$) of a symbol by a multiplication in the frequency domain with $e^{-j\omega n \cdot T}s$, wherein n is an integer number.

10. Attenuation apparatus for attenuating at least partially out-of-band signals of a multi-carrier symbol signal comprising:

- means for weighting out-of-band correction sub-carriers ($R_{k,q}$) at correction frequencies ($\omega_k$) with provided correction coefficients ($r_{k,q}$), and
- means for subtracting the weighted out-of-band correction sub-carriers ($R_{k,q}$) from the multi-carrier symbol signal.

11. Attenuation apparatus for attenuating at least partially out-of-band signals of a multi-carrier symbol signal comprising:

- a fourier transformation unit (FT) for performing a fourier transformation for each multi-carrier symbol signal;
- a correction network (NW) for attenuating at least partially out-of-band signals of a multi-carrier symbol signal by weighting out-of-band correction carriers ($R_{k,q}$) at predetermined correction frequencies ($\omega_k$) with correction coefficients and subtracting the weighted out-of-band correction carriers ($R_{k,q}$) from the transformed multi-carrier symbol signals; and
- an inverse fourier transformation unit (IFT) for performing an inversed fourier transformation to generate the attenuated signal.

12. Attenuation apparatus according to claim 11, wherein the fourier transformation unit (FT) is formed by a fast fourier transformation unit (FFT).

13. Attenuation apparatus according to claim 11, wherein the inverse fourier transformation unit (IFT) is formed by an inverse fast fourier transformation unit (IFFT).

## FIG 1

$|F_{p,q}(w)|$

$SC_{-1,q}$   $SC_{0,q}$   $SC_{+1,q}$   $SC_{p,q}$   $SC_{n,q}$

$\cdots$

$W_{-1,q}$   $W_{+1,q}$   $W_{n,q}$   $W$

$W_{0,q}$

## FIG 2A

$|F_q|^2$

FB_OUT_LOW   FB_IN   FB_OUT_HIGH

V1

$W_0$   $W_1$   $W$

FIG 2B

$|F_q|^2$

V1
V3
W₁
V2

W

FIG 3

```
┌─────────────────────────────┐
│   SELECTING OUT-OF-BAND      │── S1
│        FREQUENCIES           │
└─────────────────────────────┘
              │
              ▼
┌─────────────────────────────┐
│  ESTABLISHING NON-ORTHOGONAL │── S2
│       BASIC FUNCTION         │
└─────────────────────────────┘
              │
              ▼
┌─────────────────────────────┐
│     BUILDING ORTHOGONAL      │── S3
│       BASIC FUNCTION         │
└─────────────────────────────┘
              │
              ▼
┌─────────────────────────────┐
│    CALCULATING ORTHOGONAL    │── S4
│        COEFFICIENTS          │
└─────────────────────────────┘
              │
              ▼
┌─────────────────────────────┐
│  CALCULATING NON-ORTHOGONAL  │── S5
│        COEFFICIENTS          │
└─────────────────────────────┘
              │
              ▼
┌─────────────────────────────┐
│    CALCULATING CORRECTION    │── S6
│        COEFFICIENTS          │
└─────────────────────────────┘
```

# FIG 4

Attenuation Apparatus    1A

# FIG 5

EP 2 007 093 A1

# FIG 6

EP 2 007 093 A1

FIG 7

Attenuation Apparatus 1B

EP 2 007 093 A1

# FIG 8

Attenuation Apparatus   1C

# FIG 9

Attenuation Apparatus 1D

FIG 10

Attenuation Apparatus   1E

EP 2 007 093 A1

**European Patent Office**

## EUROPEAN SEARCH REPORT

Application Number

EP 07 01 2014

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 97/40609 A (AMATI COMMUNICATIONS CORP [US]; BINGHAM JOHN A C [US]) 30 October 1997 (1997-10-30) * page 9, line 14 - page 10, line 30 * * page 2, line 19 * | 1,3, 10-13 | INV. H04L27/26 H04L25/03 |
| A | | 2,4-9 | |
| | ----- | | |
| X | BRANDES S ET AL: "Reduction of out-of-band radiation in OFDM based overlay systems" 2005 1ST IEEE INTERNATIONAL SYMPOSIUM ON NEW FRONTIERS IN DYNAMIC SPECTRUM ACCESS NETWORKS (IEEE CAT. NO. 05EX1243) IEEE PISCATAWAY, NJ, USA, 8 November 2005 (2005-11-08), - 11 November 2005 (2005-11-11) pages 662-665, XP002460471 * page 662, right-hand column, line 4 - line 11 * * page 662, right-hand column, paragraph 3 - page 663, left-hand column, paragraph 2 * | 1,3, 10-13 | |
| | | | TECHNICAL FIELDS SEARCHED (IPC) |
| A | | 2,4-9 | H04L |
| | ----- | | |
| A | HWASUN YOO ET AL: "Edge sidelobe suppressor schemes for uplink of orthogonal frequency division multiple access systems" GLOBECOM'02. 2002 - IEEE GLOBAL TELECOMMUNICATIONS CONFERENCE. CONFERENCE PROCEEDINGS. TAIPEI, TAIWAN, vol. VOL. 1 OF 3, 17 November 2002 (2002-11-17), - 21 November 2002 (2002-11-21) pages 584-588, XP010636018 New York, USA ISBN: 0-7803-7632-3 * abstract * | 1-13 | |
| | ----- | | |

The present search report has been drawn up for all claims

| Place of search | Date of completion of the search | Examiner |
|---|---|---|
| The Hague | 30 November 2007 | Koukourlis, Sotirios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 01 2014

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2007

| Patent document cited in search report | | Publication date | Patent family member(s) | | Publication date |
|---|---|---|---|---|---|
| WO 9740609 | A | 30-10-1997 | AU | 2675397 A | 12-11-1997 |
| | | | CN | 1222276 A | 07-07-1999 |
| | | | EP | 0894389 A1 | 03-02-1999 |
| | | | JP | 3980063 B2 | 19-09-2007 |
| | | | JP | 2000509578 T | 25-07-2000 |
| | | | JP | 2007202176 A | 09-08-2007 |
| | | | KR | 20000010535 A | 15-02-2000 |

EPO FORM P0459

For more details about this annex : see Official Journal of the European Patent Office, No. 12/82